# EUROPÄISCHE PATENTSCHRIFT

(11) **EP 0 960 328 B1**
(45) Veröffentlichungstag und Bekanntmachung des Hinweises auf die Patenterteilung: **06.11.2002**
(21) Anmeldenummer: 98909390.1
(22) Anmeldetag: 05.02.1998
(51) Int. Cl.: G01N 3/08, G01N 3/60, F01L 3/02

(54) **VERFAHREN UND VORRICHTUNG ZUR PRÜFUNG EINES AUS SPRÖDEM MATERIAL BESTEHENDEN BAUTEILS**
METHOD AND DEVICE FOR TESTING A COMPONENT MADE FROM BRITTLE MATERIAL
PROCEDE ET DISPOSITIF POUR VERIFIER L'ETAT D'UN ELEMENT REALISE DANS UN MATERIAU FRAGILE

(30) Priorität: 13.02.1997 DE 19705412
(43) Veröffentlichungstag der Anmeldung: 01.12.1999
(73) Patentinhaber: CeramTec AG Innovative Ceramic Engineering, 73207 Plochingen (DE)
(72) Erfinder: ROSENFELDER, Ottmar, D-95100 Selb (DE); STEINER, Matthias, D-90552 Röthenbach (DE); STINGL, Peter, D-91207 Lauf (DE); BAUER, Hans, D-85095 Denkendorf (DE); HALDENWANGER, Hans-Günther, D-85055 Ingolstadt (DE); HUBER, Karl, D-85072 Eichstätt (DE); RÖHR, Mike, D-85055 Ingolstadt (DE)
(74) Vertreter: Scherzberg, Andreas, Dr.
(86) Internationale Anmeldenummer: EP9800610
(87) Internationale Veröffentlichungsnummer: WO98036262

(56) Entgegenhaltungen:
- EP-A- 0 660 101
- US-A- 5 237 876
- PATENT ABSTRACTS OF JAPAN vol. 015, no. 131 (P-1186), 29.März 1991 -& JP 03 013842 A (HONDA MOTOR CO LTD), 22.Januar 1991,
- SHIGERU AKIYAMA ET AL: "A NEW METHOD TO EVALUATE THE THERMAL SHOCK RESISTANCE OF CERAMICS BY LASER PULSE IRRADIATION" FUSION TECHNOLOGY, Bd. 23, Nr. 4, 1.Juli 1993, Seiten 426-434, XP000369725

## Beschreibung

Die Erfindung betrifft ein Verfahren zur Prüfung eines aus sprödem Material bestehenden Bauteils und eine Vorrichtung zur Durchführung dieses Verfahrens.

Unter sprödem Material werden im folgenden ganz allgemein Werkstoffe verstanden, deren Versagensverhalten durch herstellungsbedingte Mikrodefekte wie z. B. Mikrorisse, Poren, Fremdeinschlüsse, bestimmt wird. Darunter fallen so verschiedene Materialien wie Keramik, Gusseisen, Hartmetalle, intermetallische Phasen, Glas oder auch einige Kunststoffe. Die nachfolgenden Ausführungen beziehen sich im wesentlichen auf Bauteile aus Keramik. Es soll jedoch betont werden, dass dies keine Einschränkung der Erfindung auf das Material Keramik an sich darstellt.

Bei der industriellen Fertigung werden immer mehr metallische Bauteile durch keramische Bauteile ersetzt. Der Grund hierfür liegt in den verbesserten Materialeigenschaften von Keramik, insbesondere dem geringeren spezifischen Gewicht, der höheren Temperaturfestigkeit, der besseren Korrosionsbeständigkeit und der niedrigeren Wärmekapazität. Als weitere Vorteile sind die höhere Steifigkeit, das bessere Reibungsverhalten sowie die geringere Verschleißneigung zu nennen. Daraus ergeben sich insbesondere beim Kraftfahrzeugbau eine Vielzahl von Vorteilen. Ein wesentlicher Aspekt ist die Gewichtseinsparung, die sich durch die direkte bauteilbezogene Gewichtseinsparung und auch durch konstruktionsbedingte Folgegewichtseinsparungen bemerkbar macht. Aufgrund des besseren Reibungsverhaltens von Keramik sind auch die Reibungsverluste, z. B. im Ventiltrieb, geringer. Insgesamt wirkt sich damit der Ersatz von metallischen Bauteilen durch keramische Bauteile im geringeren Kraftstoffverbrauch, einer Geräuschreduzierung, einer Leistungsverbesserung und einer Emissionsverbesserung des Verbrennungsmotors aus.

Ein Nachteil keramischer Bauteile liegt aufgrund des spröden Bruchverhaltens in ihrem Versagensmechanismus bei Überschreitung der lokalen Materialfestigkeit. Im Gegensatz zu Werkstoffen mit duktilem Bruchverhalten, bei denen vorhandene Spannungsüberhöhungen durch plastische Verformungsvorgänge abgebaut werden, können bei keramischen Werkstoffen i.d.R. keine spannungsreduzierenden plastischen Verformungen auftreten. Bedingt durch dieses Verhalten können an herstellungsbedingten Fehlern wie z. B. Mikrorissen, Poren, Fremdeinschlüsse etc. Spannungsüberhöhungen auftreten und bei Überschreitung der lokalen Materialfestigkeit das Bauteilversagen durch spontanes Rißwachstum einleiten. Trotz einer ständigen Verbesserung der Festigkeitseigenschaften von keramischen Hochleistungswerkstoffen ist aufgrund der ebenfalls immer höher werdenden Qualitätsanforderungen, insbesondere bei der Kraftfahrzeugherstellung, eine strenge Prüfung der Bauteile vor ihrem Einbau notwendig. Da das Auftreten von Bauteilfehlern statistisch bedingt ist, reicht zur Freigabeprüfung der Bauteile eine stichprobenhafte Überprüfung wie sie für Bauteile aus duktilen Werkstoffen stattfindet nicht aus. Um die Funktionstüchtigkeit der einzelnen Bauteile zu gewährleisten, ist deshalb eine 100 %-Prüfung jedes einzelnen Bauteils erforderlich. Dies bedeutet bei hohen Stückzahlen einen erheblichen Zeit- und Kostenaufwand.

Es sind verschiedene Methoden und Verfahren zur zerstörungsfreien Prüfung von keramischen Bauteilen bekannt. Dazu zählen z. B. das Ultraschallverfahren, bei dem die rückgestreuten Ultraschallsignale ausgewertet werden, oder mikroröntgenografische Verfahren, bei denen das unterschiedliche Absorptionsverhalten von Grundwerkstoff und Defekten bzgl. der Röntgenstrahlung ausgenutzt wird. Für hohe Stückzahlen sind diese Verfahren ungeeignet, da sie sehr zeitaufwendig sind, einen erheblichen Auswerteaufwand benötigen und deren Fehlerentdeckungswahrscheinlichkeit bisher nicht ausreichend ist. Außerdem ist es äußerst schwierig Kriterien festzulegen, die exakt angeben, ob das untersuchte Bauteil der geforderten Belastung standhalten wird.

Aus diesem Grunde werden auch Prüfverfahren eingesetzt, die eine Belastung des Bauteils, wie sie im Betrieb auftreten, so gut wie möglich simulieren (Überlastversuch oder Prooftest). Aus der EP 0 660 101 ist ein Prüfverfahren für keramische Ventile bekannt, bei dem Ventile für einen Verbrennungsmotor einer mechanischen Belastung und gleichzeitig einer thermischen Belastung ausgesetzt werden. Zur Erzeugung der thermischen Belastung muss das Ventil ungleichmäßig erwärmt werden z.B. durch Laserbestrahlung.

Der wesentliche Nachteil dieses Verfahrens besteht darin, dass die Erwärmung des zu prüfenden Ventils äußerst aufwendig und kompliziert ist. Erwärmung und Abkühlung beanspruchen relativ viel Zeit. Die fraglichen Temperaturen liegen sehr hoch und beeinträchtigen die Handhabbarkeit des Ventils. Eine realistische Temperaturverteilung, wie sie für Ventile beim Betrieb des Motors auftritt, lässt sich nur äußerst schwer erzielen. So ist z. B. der Wärmeübergang vom Ventil auf die gekühlten Ventilsitze nur durch eine aufwendige Kühlung der Ventilhalterung, in der das Ventil während des Prüfverfahrens sitzt, zu erreichen. Die gesamte Vorrichtung insbesondere zur Wärmeerzeugung (z. B. Laser) und das Kühlsystem sind sehr aufwendig, teuer und wartungsintensiv. Insgesamt benötigt die Prüfung des einzelnen Bauteils zuviel Zeit, um das Prüfverfahren für eine schnelle Prüffolge, wie sie bei hohen Stückzahlen und wirtschaftlichen Randbedingungen notwendig ist, einzusetzen.

Aus der US 5,237,876 und PAJP Vol 105 No 131 (P-1186) und JP 03 103 842 A ist es bekannt, ein aus sprödem (Keramik-) Material bestehendes Bauteil einer rein mechanischen Prüfung zu unterwerfen. Hierbei wird durch mechanische Krafteinwirkung auf der Oberfläche des Bauteils eine Spannungsverteilung im Körper des Bauteils erzeugt.

Hierdurch können nur Aussagen über das Werkstoffverhalten gemacht werden, aber keine Aussagen über die Belastung aufgrund thermisch bedingter Betriebsspannungen.

Aus S. Akiyama et al, Fusion Technology, Vol. 23, No. 4, S. 426 - 434 ist weiterhin bekannt, durch thermische Krafteinwirkung eine Spannungsverteilung im Bauteil zu erzeugen.

Aufgabe der vorliegenden Erfindung ist es, ein Verfahren und eine Vorrichtung zur Prüfung eines aus sprödem Material bestehenden Bauteils anzugeben, das die oben angegebenen Nachteile nicht besitzt, das insbesondere eine rasche, einfache und zuverlässige Prüfung jedes einzelnen Bauteils gewährleistet und das einfach und kostengünstig realisierbar ist.

Gelöst wird diese Aufgabe durch die im Anspruch 1 oder Anspruch 2 angegebenen Verfahrensschritte bzw. durch die im Anspruch 8 angegebenen gegenständlichen Merkmale.

Vorteilhafte Weiterentwicklungen der Erfindung sind in den Unteransprüchen angegeben.

Die wesentliche Idee der Erfindung besteht darin, die im Betrieb auftretende thermische Belastung und mechanische Belastung des Bauteils durch äußere, rein mechanische Belastungen (Krafteinwirkungen) zu simulieren. Der thermische Anteil der Belastung ergibt sich aus der ungleichmäßigen Temperaturverteilung im Bauteil während des Betriebs. Diese ungleichmäßige Temperaturverteilung führt zu einer thermisch bedingten Spannungsverteilung. Die gesamte innere Spannungsverteilung, die auch die mechanische Belastung umfaßt, wird während des Prüfverfahrens durch rein mechanische Krafteinwirkungen auf das Bauteil simuliert. Die Stempelform und die Stempelkraft sowie die Auflageflächen der Halterung, die jeweils Einfluß auf die Lage und Richtungen der Krafteinleitungen in das Bauteil haben, werden über spezielle Berechnungen (z.B. analytisch oder Finite-Elemente-Methode) so ermittelt, daß eine gewünschte Spannungsverteilung realisierbar ist. Unter einer Lagerbedingung ist im folgenden die spezielle Form und räumliche Anordnung der Auflageflächen der Halterung gemeint.

Der wesentliche Vorteil des Verfahrens besteht darin, daß die im Betrieb auftretende thermische und mechanische Belastung des Bauteils durch eine bzw. mehrere rein mechanische Belastungen ersetzt wird und so bei der Durchführung der Prüfung keine Temperaturverteilung im Bauteil erzeugt werden muß. Dadurch ist das ganze Prüfverfahren sehr einfach und schnell durchführbar. Die Stempelform, Stempelkraft und Lagerbedingung ist abhängig von der Bauteilform und der geforderten Belastung (kritischen Spannungsverteilung), für die das Bauteil ausgelegt sein sollte. Die erstmalige Berechnung der Stempelformen, Lagerbedingungen etc. ist zwar für ein einzeines Bauteil relativ aufwendig. Je größer die zu prüfende Stückzahl der Bauteile ist, desto mehr lohnt sich dieser Aufwand.

Neben dem erfindungsgemäßen Verfahren ist auch eine Prüfvorrichtung Gegenstand der Erfindung. Die wesentliche Idee hierbei besteht darin, den Stempel und die Lagerbedingungen der Prüfvorrichtung so auszubilden, daß mit Hilfe des Stempels eine Kraft auf die Oberfläche des Bauteils ausgeübt werden kann, die eine gewünschte, vorgegebene Spannungsverteilung im Bauteil hervorruft, die zumindest teilweise einer thermischen Spannungsverteilung entspricht.

Nachfolgend ist die Erfindung anhand eines in der Zeichnung dargestellten Ausführungsbeispiels näher erläutert. Es zeigen:
- **Fig. 1**: Schnitt eines Ventils in Gebrauchsanordnung,
- **Fig. 2**: Prüfvorrichtung mit Stempel und Halterung, in die ein Ventil eingesetzt ist, in schematischer Darstellung.

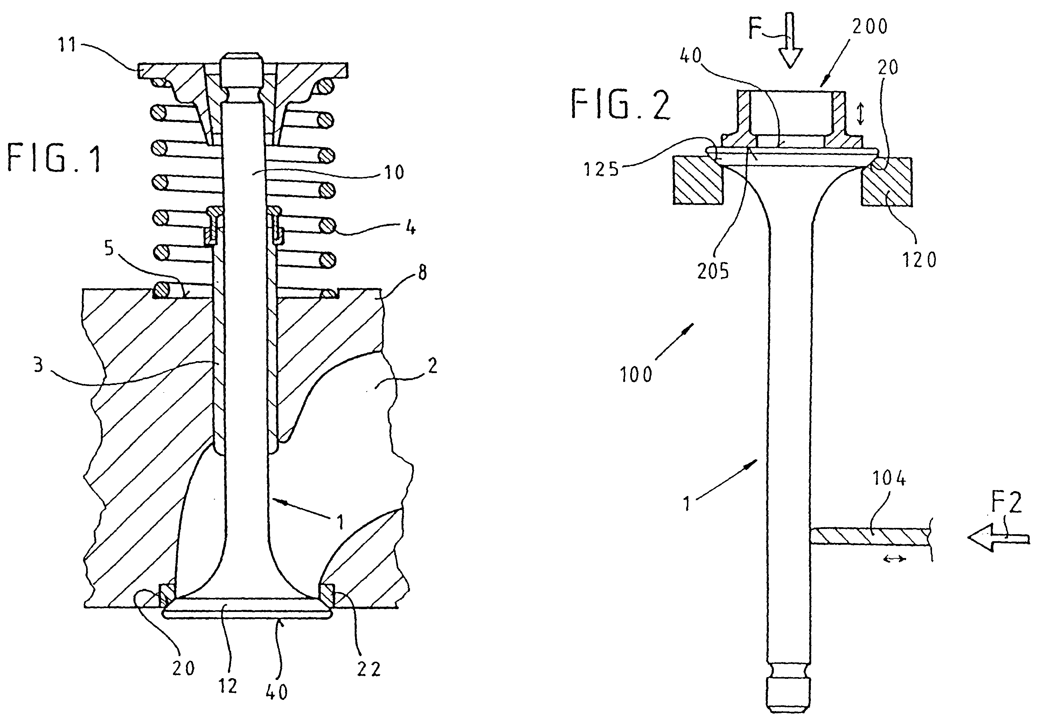

Bei dem beispielhaft ausgesuchten Bauteil handelt es sich um ein Ventil für einen Verbrennungsmotor aus Keramik, das ein herkömmliches Ventil aus Metall aufgrund der in der Einleitung angegebenen Vorteile ersetzt. Solche Ventile werden bereits versuchsweise in Kraftfahrzeugen eingesetzt. Fig. 1 zeigt ein Ventil in seiner Gebrauchsanordnung. Das Ventil 1 dient zum Verschließen eines Auslaßkanals 2 eines Verbrennungsmotors. Der Auslaßkanal 2 verläuft in einem nicht näher dargestellten Zylinderkopf 8. Ebenfalls nicht näher dargestellt ist der Brennraum des Verbrennungsmotors. Das Ventil 1 wird in einer Ventilschaftführung 3 geführt. Es steht unter Federspannung einer Ventilfeder 4, die sich einerseits an einer Ausnehmung 5 des Zylinderkopfs 8 sowie an einem am Schaft 10 angebrachten Ventilfederteller 11 abstützt. Mit einer Randfläche 20 des Ventiltellers 12 liegt das Ventil 1 an einem im Zylinderkopf 8 angeordneten Ventilsitzring 22 an. Da der Zylinderkopf 8 und der Ventilsitzring 22 gekühlt sind, wird auch das Ventil 1 über die Randfläche 20 gekühlt. Mit Hilfe einer in der Zeichnung nicht dargestellten Betätigungsvorrichtung (Nockenwelle) wird das Ventil 1 in Schaftrichtung hin- und herbewegt. Dabei wird der Auslaßkanal 2 geöffnet und verschlossen. Bei Verbrennungsmotoren finden z. B. bei einer Drehzahl von 6.000 1/min etwa 50 Schließ- bzw. Öffnungszyklen pro Sekunde statt. Dadurch wirken auf das Ventil 1 erhebliche Beschleunigungs- bzw. Verzögerungskräfte. Mit derselben Häufigkeit erfolgen die Verbrennungsvorgänge im Brennraum. Bei diesen Verbrennungsvorgängen entstehen enorme mechanische und thermische Belastungen des Ventils 1. Auf seine Kopffläche 40 wirken erhebliche Druckkräfte (bis zu 100 bar), gleichzeitig erfolgt eine starke Erwärmung. Die über den Auslaßkanal 2 ausströmenden Verbrennungsgase sorgen auch für eine ungleichmäßige Erwärmung des Ventils 1. Die sich innerhalb des Ventils 1 einstellende Temperaturverteilung ist stark inhomogen und führt zu einer enormen thermischen Belastung, die sich als thermische Spannungsverteilung bemerkbar macht. Um zu testen, ob ein Ventil 1 den Belastungen im Betrieb standhalten wird, muß es vor dem Einsatz geprüft werden.

In Fig. 2 ist eine erfindungsgemäße Vorrichtung zur Durchführung des erfindungsgemäßen Prüfverfahrens schematisch dargestellt. Eine nicht näher dargestellte Prüfvorrichtung 100 weist einen Stempel 200 und eine Halterung 120 auf, in die ein Ventil 1 eingesetzt ist. Das Einsetzen erfolgt per Hand, teilautomatisch oder auch vollautomatisch. Der Ventilteller 12 liegt mit seiner Randfläche 20 auf einer Stützfläche 125 der Halterung 120 an. Oberhalb der Kopffläche 40 des Ventils 1 ist der mittels einer nicht näher dargestellten Vorrichtung relativ zur Halterung 120 verschiebbare (durch Pfeil angedeutet) Stempel 200 angeordnet, dessen Stempelauflagefläche 205 eine spezielle Form aufweist. Für komplizierter aufgebaute Bauteile und Belastungen besteht auch die Möglichkeit über mehrere Stempel mit parallelen oder verschiedenen Kraftrichtungen auf das Bauteil gleichzeitig einzuwirken.

Der wesentliche Teil der Erfindung liegt in der Bestimmung der Form bzw. Formen der Stempelauflagefläche(n), Stempelkräften sowie der Lagerbedingung nach einem der oben angegebenen Berechnungsverfahren. Für das Berechnungsverfahren muß vorab die im Betrieb zu erwartende Temperaturverteilung im Ventil 1 bestimmt werden. Diese Temperaturverteilung läßt sich aus Meßwerten abschätzen, die beim Einsatz spezieller Ventile während des Betriebs des Verbrennungsmotors gewonnen wurden. Sie geben eine über viele Verbrennungszyklen und Lastzustände gemittelte Temperaturverteilung wieder. Aus der Temperaturverteilung wird über die bekannten Materialkonstanten die sich im Ventil 1 ergebende thermische Spannungsverteilung errechnet. Dieser thermischen Spannungsverteilung wird eine durch die mechanische Belastung des Ventils 1 verursachte mechanische Spannungsverteilung überlagert. Gegebenenfalls werden die thermische und mechanische Belastung noch mit entsprechenden Sicherheitsfaktoren versehen. Anschließend werden die Form und Anordnung des bzw. der Stempel, die Stempelkräfte sowie die Lagerbedingungen ermittelt, die die vorgegebene Spannungsverteilung am besten wiedergeben. Die Stempelauflagefläche 205 und die Stützfläche 125 sind entsprechend dieser Vorgaben ausgebildet.

Nachfolgend ist das erfindungsgemäße Verfahren näher erläutert. Zu Beginn wird das aus sprödem Material bestehende Ventil 1 in die Halterung 120 der Prüfvorrichtung 100 eingesetzt und dann der Stempel 200 abgesenkt. Der Stempel 200 drückt mit einer vorgegebenen Stempelkraft F auf die Kopffläche 40. Durch diese Krafteinwirkung auf die Oberfläche des Ventils 1 wird im Körper des Ventils 1 eine Spannungsverteilung erzeugt, die einer bestimmten vorgegebenen thermischen und mechanischen Belastung entspricht. Nach kurzer Zeit wird der Stempel 200 angehoben und das Ventil 1 wird aus der Vorrichtung 100 entnommen. Der Zeitraum, in dem die Stempelkraft F auf die Kopffläche 40 einwirkt, kann relativ kurz (einige Sekunden) gewählt werden, da sich die Spannungsverteilung im Ventil 1 unmittelbar einstellt und das Versagen durch Rißwachstum und Bruch sofort einsetzen würde. Je nach dem ob das Ventil 1 der Belastung standhält, ist es für den Einsatz geeignet und kann eingebaut werden. Wenn das Ventil bricht, ist dies sofort erkennbar und es wird aussortiert. Die Prüfung eines einzelnen Ventils erfolgt somit sehr schnell, zuverlässig und ohne Schädigung der Ventile, die die Prüfung bestanden haben.

Es besteht auch die Möglichkeit, eine rein thermische Belastung zu simulieren. Dazu wird die Stempelform, die Stempelkraft und die Lagerbedingung so bestimmt, daß durch sie der vorgegebene thermische Belastungszustand simuliert werden kann. Dieses in Anspruch 2 angegebene Verfahren ist besonders dann von Vorteil, wenn keine oder fast keine mechanische Belastung des Bauteils auftritt. Mit dem erfindungsgemäßen Verfahren lassen sich auch mehrere unterschiedliche Spannungsverteilungen, wie sie bei zwei oder mehreren Extremsituationen auftreten, schnell zeitlich nacheinander prüfen. Denkbar ist eine anfängliche große mechanische Belastung, der eine relativ geringe thermische Belastung überlagert ist und einer späteren großen thermischen Belastung, der eine geringe mechanische Belastung überlagert ist. Hierzu müssen nur die entsprechenden Stempelformen bestimmt werden. Durch Austausch der Stempel, der vorteilhafter Weise automatisiert erfolgt, kann damit ebenfalls eine schnelle Prüfung erfolgen. Dies wäre mit den bekannten Verfahren nur sehr zeitaufwendig zu realisieren, da eine Änderung der Temperaturverteilung im Bauteil immer einen relativ langen Zeitraum beansprucht.

Beim Transport der Bauteile können unterschiedliche Belastungen auftreten. Deshalb ist u.U. eine Prüfung der Bauteile bei der Herstellung nicht ausreichend. Aufgrund der Schnelligkeit des Verfahrens ist eine Prüfung der Bauteile unmittelbar vor ihrem Einbau, z.B. am Fließband, möglich. Die vorgegebenen Taktzeiten lassen sich leicht mit dem erfindungsgemäßen Verfahren bzw. Vorrichtung einhalten. Dadurch können Transportschäden, die nach einer 100 %-Prüfung auftreten können, ausgeschlossen werden.

Da die Materialeigenschaften und ihre Temperaturabhängigkeit für die meisten Werkstoffe sehr genau bekannt sind und die Temperaturverteilung des Bauteils im Betrieb sich bestimmen läßt, ist das Verfahren für eine Vielzahl von Materialien, wie z. B. Keramik, insbesondere Keramik auf Siliciumnitridbasis, Siliciumcarbidbasis oder keramische Verbund-Werkstoffe, Gußeisen, Hartmetalle, intermetallische Phasen, Glas oder auch einige Kunststoffe, einsetzbar.

In besonderer Weise eignet sich das Verfahren zur Prüfung von keramischen Bauteilen beim Kraftfahrzeugbau, wie z. B. Ventile, Ventilsitze, Portliner, Ventilführungen, Kolben, Kolbenbolzen, Kolbenteile, Zylinderbuchsen, die im Motor zum Einsatz kommen. Aufgrund der hohen Wärmeentwicklung im Verbrennungsmotor unterliegen diese Teile immer neben der mechanischen Belastung auch einer hohen thermischen Belastung.

Mit dem erfindungsgemäßen Verfahren läßt sich in sehr einfacher Weise eine Spannungsverteilung in einem Bauteil erzeugen, die zumindest teilweise einer thermischen Belastung entspricht.

Mit Hilfe der erfindungsgemäßen Vorrichtung läßt sich das erfindungsgemäße Verfahren sehr leicht durchführen. Die Stempelauflagefläche 205 ist entsprechend der vorgegebenen Belastung, die zumindest teilweise einer thermischen Belastung entspricht, ausgebildet.

Da beim Einsatz eines Ventils in einem Verbrennungsmotor neben der mechanischen Druckbelastung auf die Kopffläche 40 u.U. auch ein Biegemoment auf den Schaft wirken kann, ist es sicher sinnvoll, die gesamte Belastung des Ventils, die auch eine thermische Belastung einschließen kann, im Prüfverfahren zu simulieren. Um zusätzlich eine Biegebelastung des Schaftes zu realisieren, ist ein verschiebbarer Arm 104 an der Prüfvorrichtung vorgesehen, der durch eine in der Zeichnung nicht dargestellte Einrichtung betätigbar ist. Während der Prüfung wirkt zusätzlich eine Kraft F2 auf den Ventilschaft 10, dadurch wird dieser etwas aus seiner Normallage (Vertikale) ausgelenkt. Da das Ventil 1 rotationssymmetrisch zu seiner Schaftachse ist, ist die Einbaulage bezüglich dieser Achse nicht definiert. Aus diesem Grund wird der Arm 104 um die Schaftachse während der Belastung rotiert. Somit kann eine umlaufende Biegebelastung des Ventilschaftes 10 in einfacher Weise simuliert werden.

Mit der erfindungsgemäßen Vorrichtung lassen sich Ventile, insbesondere aus Keramik, leicht und schnell auf ihre Einsatzfähigkeit hin prüfen.

## Patentansprüche

1. Verfahren zur Prüfung eines aus sprödem Material bestehenden Bauteils (1), bei dem die im Betrieb des Bauteils auftretenden thermischen und mechanischen Spannungen berechnet werden und durch eine rein mechanische Krafteinwirkung auf die Oberfläche des Bauteils (1) eine Spannungsverteilung im Körper des Bauteils (1) erzeugt wird, derart, dass die sich ergebende Spannungsverteilung der vorgegebenen ungleichmäßigen thermischen und mechanischen Belastung entspricht.

2. Verfahren zur Prüfung eines aus sprödem Material bestehenden Bauteils (1), bei dem die im Betrieb des Bauteils auftretenden thermischen und mechanischen Spannungen berechnet werden und durch Krafteinwirkung auf die Oberfläche des Bauteils (1) eine Spannungsverteilung im Körper des Bauteils (1) erzeugt wird, derart, dass die sich ergebende Spannungsverteilung einer vorgegebenen ungleichmäßigen thermischen Belastung entspricht.

3. Verfahren nach einem der vorhergehenden Ansprüche, **dadurch gekennzeichnet, dass** mindestens zwei unterschiedliche Spannungsverteilungen im Bauteil (1) erzeugt werden.

4. Verfahren nach einem der vorhergehenden Ansprüche, **dadurch gekennzeichnet, dass** die Prüfung unmittelbar vor dem Einbau des Bauteils (1) erfolgt.

5. Verfahren nach einem der vorhergehenden Ansprüche, **dadurch gekennzeichnet, dass** das Bauteil (1) aus Keramik insbesondere auf Siliciumnitridbasis, Siliciumcarbidbasis oder keramischen Verbund-Werkstoffen hergestellt ist.

6. Verfahren nach einem der vorhergehenden Ansprüche, **dadurch gekennzeichnet, dass** das Bauteil (1) aus Gusseisen, Hartmetall, intermetallischen Phasen, Glas oder Kunststoff hergestellt ist.

7. Verfahren nach einem der vorhergehenden Ansprüche, **dadurch gekennzeichnet, dass** das Bauteil (1) ein Element aus der Gruppe Ventil, Ventilsitz, Portliner, Ventilführung, Kolben, Kolbenbolzen, Kolbenteil oder Zylinderbuchse ist.

8. Vorrichtung zur Durchführung des Verfahrens nach einem der Ansprüche 1 bis 7, mit einer in einer Prüfvorrichtung (100) angeordneten Halterung (120) für ein Ventil (1), einem relativ zur Halterung (120) verschiebbaren Stempel (200) zur Erzeugung einer Krafteinwirkung auf die Kopffläche (40) des Ventils (1), **dadurch gekennzeichnet, dass** die Stempelauflagefläche (205) so ausgebildet ist, dass eine Spannungsverteilung im Ventilkörper erzeugbar ist, die mindestens teilweise einer thermischen Belastung entspricht.

## Claims

1. Method for testing a component (1) that is made of brittle material, wherein the thermal and mechanical stresses which occur during operation of the component are calculated and, a distribution of stresses is generated in the body of the component (1) by the action of a purely mechanical force on the surface of the component (1), in such a way that the resultant distribution of stresses corresponds to the given nonuniform thermal and mechanical load.

2. Method for testing a component (1) that is made of brittle material, wherein the thermal and mechanical stresses which occur during operation of the component are calculated and, a distribution of stresses is generated in the body of the component (1) by the action of pure mechanical force on the surface of the component (1), in such a way that the resultant distribution of stresses corresponds to a given nonuniform thermal load.

3. Method according to one of the preceding claims, **characterised in that** at least two different stress distributions are generated in the component (1).

4. Method according to one of the preceding claims, **characterised in that** the test is carried out directly before the component (1) is installed.

5. Method according to one of the preceding claims, **characterised in that** the component (1) is produced from ceramic material, in particular silicon nitride-based ceramic material, silicon carbide-based ceramic material or ceramic composite materials.

6. Method according to one of the preceding claims, **characterised in that** the component (1) is produced from cast iron, hard metal, intermetallic phases, glass or plastics material.

7. Method according to one of the preceding claims, **characterised in that** the component (1) is an element from the group valve, valve-seat, portliner, valve-guide, piston, piston-pin, piston-portion or cylinder-liner.

8. Arrangement for carrying out the method according to one of claims 1 to 7, having a holder (120) for a valve (1) arranged in a testing arrangement (100), a punch (200) movable relative to the holding support (120), generating an action of force on the head face (40) of the valve (1), **characterised in that** the punch contact area (205) is formed in such a way that it is possible to generate a distribution of stresses in the valve body that corresponds at least in part, to a thermal load.

## Revendications

1. Procédé de contrôle d'un élément (1) réalisé en un matériau fragile, dans lequel on calcule les contraintes thermiques et mécaniques qui apparaissent en fonctionnement et, par une action purement mécanique de forces sur la surface de l'élément (1), on produit une répartition de contraintes dans le corps de l'élément (1) telle, que la répartition de contraintes obtenue corresponde à la sollicitation thermique et mécanique non homogène prédéterminée.

2. Procédé de contrôle d'un élément (1) réalisé en un matériau fragile, dans lequel on calcule les contraintes thermiques et mécaniques qui apparaissent en fonctionnement et par une action de forces sur la surface de l'élément (1), on produit une répartition de contraintes dans le corps de l'élément (1) telle, que la répartition de contraintes obtenue corresponde à une sollicitation thermique non homogène prédéterminée.

3. Procédé selon une des revendications précédentes, **caractérisé par** au moins deux répartitions de contraintes différentes dans l'élément (1).

4. Procédé selon une des revendications précédentes, **caractérisé en ce que** le contrôle a lieu juste avant le montage de l'élément (1).

5. Procédé selon une des revendications précédentes, **caractérisé en ce que** l'élément (1) est en cérmaique, en particulier à base de nitrure de silicium, à base de carbure de silicium ou de matéraiux céramiques composites.

6. Procédé selon une des revendications précédentes, **caractérisé en ce que** l'élément (1) est fabriqué en fonte, en métal dur, en des phases intermétal liques, en verre ou en matière plastique.

7. Procédé selon une des revendications précédentes, **caractérisé en ce que** l'élément (1) est un élément appartenant au groupe soupapes, sièges de soupapes, guides de soupapes, chemises de lumières, axes de piston, éléments de piston ou chemises de cylindres.

8. Dispsoitif pour la mise en oeuvre du procédé selon une des revendications 1 à 7 précédentes, avec un support (120) pour une soupape (1), disposé dans un dispositif de contrôle (100), un poinçon (200) coulissant par rapport au support (120) pour appliquer une force sur la surface de la tête (40) del a soupape (1), **caractérisé en ce que** la surface d'appui (205) du poinçon est agencée de manière à pouvoir produire dans le corps de soupape une répartition de contraintes qui correspond au moins partiellement à une sollicitation thermique.
